Europäisches Patentamt

European Patent Office

Office européen des brevets

(11) Numéro de publication : **0 473 466 A1**

# DEMANDE DE BREVET EUROPEEN

(21) Numéro de dépôt : **91401634.0**

(51) Int. Cl.⁵ : **B65G 17/48**, B05B 13/02

(22) Date de dépôt : **18.06.91**

(30) Priorité : **29.06.90 FR 9008226**

(43) Date de publication de la demande :
**04.03.92 Bulletin 92/10**

(84) Etats contractants désignés :
**DE ES FR GB IT**

(71) Demandeur : **COMPAGNIE EUROPEENNE POUR L'EQUIPEMENT MENAGER "CEPEM" 18 rue du 11 Octobre F-45140 St Jean-de-la-Ruelle (FR)**

(72) Inventeur : **Paillet, Jean THOMSON-CSF SCPI Cédex 67 F-92045 Paris la Défense (FR)**

(74) Mandataire : **Phan, Chi Quy et al THOMSON-CSF SCPI F-92045 PARIS LA DEFENSE CEDEX 67 (FR)**

(54) **Chaîne de dépôt de revêtement sur des pièces en tôle.**

(57)    Chaîne de dépôt de revêtements sur des pièces en tôle sensible à un champ magnétique (2), transportées par un convoyeur aérien (3), caractérisée en ce qu'elle comprend d'une part un convoyeur aérien (3) muni sur tout son long, de moyens d'accrochage espacés (4), pour des supports (5) assurant une suspension des pièces en tôle (2) de manière que les bords inférieurs de celles-ci balayent un même plan dans leur défilement devant des postes d'opérateurs de dépôts de revêtements, et d'autre part à un écart prédéterminé en dessous de ce plan, et parallèlement au trajet de ces pièces en tôle (2), un chemin magnétique anti-oscillatoire (6) exerçant à distance et au passage une attraction magnétique sur ces pièces en tôle (2).

EP 0 473 466 A1

La présente invention concerne une chaîne de dépôt des revêtements sur des pièces en tôle. Ces pièces en tôle sont, soit de simples plaques, soit des enveloppes ou des parties d'enveloppe à configuration simple ou complexe, des objets, des machines, des appareils industriels ou ménagers ou des engins de transport. Ces pièces en tôle ont souvent besoin d'un revêtement de protection contre leur oxydation ou d'un revêtement de décoration.

Un revêtement de protection et/ou de décoration de ces pièces en tôle est fréquemment une peinture, un vernis, un émail ou un autre produit connu utilisé comme tel.

Dans une fabrication en série, ces pièces en tôle sont habituellement suspendues à un convoyeur aérien qui les transporte devant des postes de dépôt de revêtement pour recevoir une peinture, un vernis ou un émail par exemple.

Ces pièces en tôle en suspension à un convoyeur aérien mobile oscillent facilement sous l'effet de leur déplacement et sous la poussée des jets de produits émis par des pulvérisateurs ou des pistolets de dépôt de revêtement. Leur balancement a pour conséquence une robotisation plus difficile de l'application et entraîne une irrégularité de dépôt, une inégalité d'épaisseur de revêtement, par conséquent une imperfection de protection et/ou un mauvais aspect esthétique de ces pièces. Pour éviter ces mauvais résultats, certaines solutions connues ont prescrit une immobilisation, soit manuelle, soit mécanique de ces pièces en tôle lors du dépôt des revêtements.

Quel que soit le type d'immobilisation, manuelle ou mécanique, de ces pièces en tôle, le convoyeur aérien doit être arrêté et la productivité de la chaîne en subit les conséquences. En plus, une immobilisation manuelle des pièces en tôle impose aux travailleurs une fatigue supplémentaire qui contribue à diminuer rapidement leur productivité.

Quant à l'utilisation des pulvérisateurs électrostatiques qui permettent de limiter le balancement des pièces en tôle accrochées à un convoyeur aérien et de s'affranchir ainsi avantageusement d'une immobilisation de ces pièces et d'un arrêt de ce convoyeur, une telle utilisation exige cependant un lourd investissement en cabines de pulvérisation électrostatique qui nécessitent habituellement d'une atmosphère contrôlée. De surcroit, l'utilisation de pulvérisateur électrostatique ne permet pas de contrôler convenablement les épaisseurs déposées dans le cas des pièces de forme complexe.

La présente invention, visant à éviter ces inconvénients, a pour objet une chaîne économique et efficace de dépôt de revêtement sur des pièces en tôle.

Selon l'invention, une chaîne de dépôt de revêtements sur des pièces en tôle sensible à un champ magnétique, transportées par un convoyeur aérien est caractérisée en ce qu'elle comprend d'une part un convoyeur aérien muni sur tout son long, de moyens d'accrochage espacés, pour des supports assurant une suspension des pièces en tôle de manière que les bords inférieurs de celles-ci balayent un même plan dans leur défilement devant des postes d'opérateurs de dépôts de revêtements, et d'autre part à un écart prédéterminé en dessous de ce plan, et parallèlement au trajet de ces pièces en tôle, un chemin magnétique anti-oscillatoire exerçant à distance et au passage une attraction magnétique sur ces pièces en tôle.

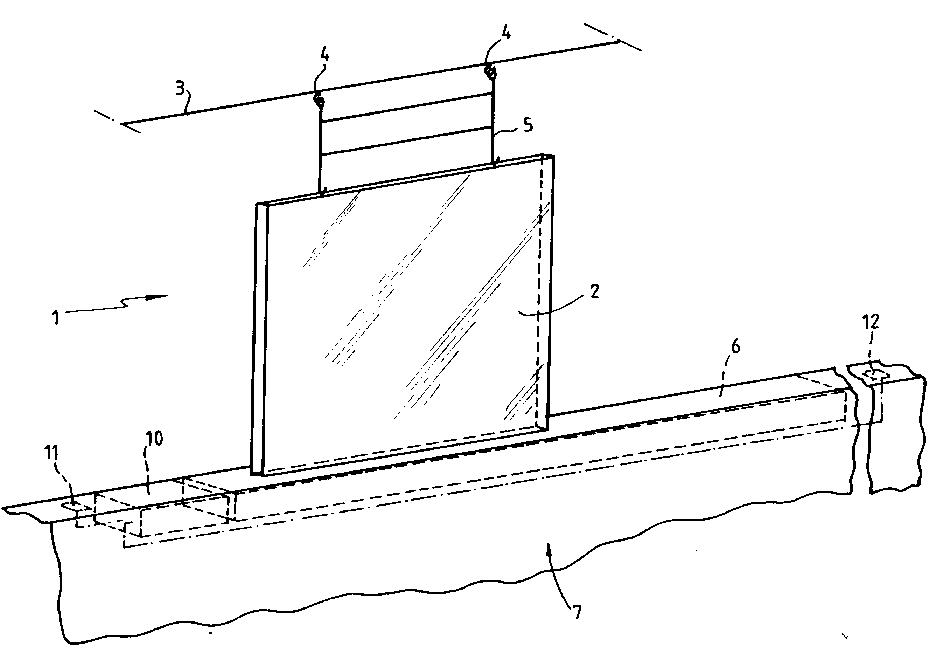

Pour mieux faire comprendre l'invention, on en décrit ci-après un exemple de réalisation illustré schématiquement dans un dessin unique ci-annexé qui montre une partie d'une chaîne de dépôt de revêtements sur des pièces en tôle de fer ou d'acier dont l'une est représentée.

Dans l'exemple illustré, il s'agit d'une chaîne de dépôt d'un revêtement d'émaillage sur des pièces en tôle d'acier qui constituent des panneaux d'une cuisinière ménagère non représentée et qui ont chacun une forme d'un plateau rectangulaire à rebord relevé, éventuellement ajouré.

Selon l'invention, une chaîne de dépôt de revêtements 1 sur des pièces 2 en tôle sensible à un champ magnétique telle qu'une tôle de fer ou d'acier comprend d'une part un convoyeur aérien 3 muni sur tout son long, de moyens d'accrochage espacés 4 sous forme de crochets ou d'anneaux par exemple, pour des supports 5 qui assurent une suspension des pièces en tôle 2 de manière que les bords inférieurs de celles-ci balayent un même plan dans leur défilement devant des postes d'opérateurs de dépôt de revêtements et d'autre part à un écart prédéterminé en dessous de ce plan et parallèlement au trajet de ces pièces en tôle 2, un chemin magnétique anti-oscillatoire 6 exerçant à distance et au passage une attraction magnétique sur les pièces en tôle 2.

Les pièces en tôle 2 suspendues au convoyeur aérien 3 oscillent facilement autour de leurs supports 5. Selon l'invention, ces pièces en tôle 2 sont efficacement et positivement maintenues stables en position par une force d'attraction magnétique exercée par le chemin magnétique anti-oscillatoire 6. La force d'attraction magnétique du chemin magnétique 6 est en effet prédéterminée en vue de maintenir stables en position ces pièces en tôle 2 même dans le cas où celles-ci sont soumises à la fois à l'effet de leur déplacement et à la poussée des jets de produits de revêtement émis par des pulvérisateurs ou pistolets non représentés lors d'un dépôt des revêtements sur leur surface. Grâce à un tel maintien de ces pièces en tôle 2 par le chemin magnétique 6, il est facile d'obtenir un revêtement à épaisseur uniforme sur les surfaces de celles-ci par un mode quelconque de dépôt de ce revêtement autrement dit le dépôt de ce revêtement peut être indifféremment réalisé par une pulvérisation manuelle ou par une pulvérisation mécanisée ou robotisée d'un produit liquide ou un produit sous forme d'une poudre électrostatique. Etant donné qu'un balancement ou une oscillation des pièces en tôle n'entraîne un effet néfaste que notamment lors d'un dépôt d'un revêtement sur leurs surfaces, le chemin magnétique 6 destiné à un maintien stable en position de ces pièces en tôle 2 est, dans l'exemple illustré, formé uniquement sur le long de chacun des postes d'opérateurs humains ou mécaniques de dépôt des revêtements tels que le poste 7 dans la chaîne de dépôt de revêtements 1.

Le chemin magnétique 6 représenté schématiquement par une longue barre en traits discontinus est constitué par des aimants permanents ou électroaimants non représentés disposés parallèlement au trajet des pièces en tôle 2 transportées par le convoyeur aérien 3 et en dessous de celles-ci suivant un écart préétabli.

La longueur du chemin magnétique 6 de chacun des postes d'opérateurs de dépôt de revêtement tel que le poste 7 est déterminée en fonction de la vitesse de défilement du convoyeur aérien 3 qui transporte les pièces en tôle 2 et du temps exigé par ce poste d'opérateurs pour accomplir le dépôt des revêtements prévus sur ces pièces en tôle 2.

Quand un chemin magnétique 6 est réalisé avec des électroaimants, les électroaimants sont alimentés en courant électrique soit en continu durant le fonctionnement de la chaîne de dépôt de revêtement 1 soit uniquement durant le passage d'une pièce en tôle 2.

Dans le deuxième cas, un système de commande d'alimentation électrique 10 représenté par des traits discontinus est associés aux électroaimants du chemin magnétique 6. Ce système de commande d'alimentation électrique 10 comprend un premier détecteur optique, mécanique, magnétique ou électronique 11, qui dès l'entrée d'une pièce en tôle 2 dans ce chemin magnétique 6, c'est-à-dire dans la zone du poste d'opérateurs de dépôt correspondant 7, déclenche une mise sous tension des électroaimants de ce chemin magnétique 6 et un deuxième détecteur optique mécanique, magnétique ou électronique 12 qui, dès la sortie de cette pièce en tôle 2 de ce chemin magnétique 6 ou cette zone de ce poste de dépôt correspondant 7 met hors tension ces électroaimants.

Le chemin magnétique 6 décrit ci-dessus est simple et facile à réaliser. Ce chemin magnétique 6 qui assure efficacemment un maintien stable en position de chacune des pièces en tôle 2 suspendues au convoyeur 3 permet d'obtenir facilement un revêtement uniforme sur ces pièces en tôle 2 sans nécessiter un arrêt de ce convoyeur aérien 3. La chaîne de dépôt de revêtements 1 réalise ainsi une excellente productivité.

**Revendications**

1. Chaîne de dépôt de revêtements sur des pièces en tôle sensible à un champ magnétique (2), transportées par un convoyeur aérien (3), caractérisée en ce qu'elle comprend d'une part un convoyeur aérien (3) muni sur tout son long, de moyens d'accrochage espacés (4), pour des supports (5) assurant une suspension des pièces en tôle (2) de manière que les bords inférieurs de celles-ci balayent un même plan dans leur défilement devant des postes d'opérateurs de dépôts de revêtements, et d'autre part à un écart prédéterminé en dessous de ce plan, et parallèlement au trajet de ces pièces en tôle (2), un chemin magnétique anti-oscillatoire (6) exerçant à distance et au passage une attraction magnétique sur ces pièces en tôle (2).

2. Chaîne selon la revendication 1, caractérisée en ce que le chemin magnétique (6) est constitué soit par des aimants permanents, soit par des électro-aimants.

3. Chaîne selon la revendication 2, caractérisée en ce que dans le chemin magnétique (6) les aimants permanents ou les électro-aimants sont prédéterminés dans leur puissance d'attraction magnétique en vue d'assurer un maintien stable en position des pièces en tôle (2) lors de leur passage devant les postes d'opérateurs de dépôt des revêtements à l'encontre de leur tendance à un balancement à la fois sous l'effet de leur déplacement et sous la poussée des jets de produits de revêtements.

4. Chaîne selon l'une des revendications 1 à 3, caractérisée en ce qu'elle comprend un chemin magnétique (6) uniquement sur le long de chacun de ses postes d'opérateurs de dépôt de revêtements (7).

5. Chaîne selon la revendication 4, caractérisée en ce que le chemin magnétique (6) de chacun des postes d'opérateurs de dépôt de revêtements a une longueur qui est déterminée en fonction de la vitesse de défilement du convoyeur aérien (3) transportant les pièces en tôle (2), et du temps exigé par ce poste d'opérateurs pour accomplir le dépôt des revêtements prévus sur ces pièces en tôle (2).

6. Chaîne selon l'une des revendications 2 et 3, caractérisée en ce que dans un chemin magnétique (6) les électroaimants sont alimentés en courant électrique soit en continu durant le fonctionnement de la chaîne (1), soit uniquement durant le passage d'une pièce en tôle (2).

7. Chaîne selon la revendication 6, caractérisée en ce qu'elle comprend dans l'alimentation électrique des électroaimants d'un chemin magnétique (6), un système de commande d'alimentation ( 10) comportant un premier détecteur (11) qui déclenche une mise sous tension électrique de ces électroaimants dès l'entrée d'une pièce en tôle (2) dans ce chemin magnétique (6) et un deuxième détecteur (12) qui met hors tension électrique ces électroaimants dès la sortie de cette pièce en tôle (2) de ce chemin magnétique (6).

Office européen
des brevets

**RAPPORT DE RECHERCHE EUROPEENNE**

Numero de la demande

EP    91 40 1634

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A-504 988 (FEY)<br>* colonne 2, ligne 26 - colonne 3, ligne 17; figures 1,2 *<br>--- | 1-3,6,7 | B65G17/48<br>B05B13/02 |
| A | DE-C-909 675 (GRAVE)<br>* page 2, ligne 53 - ligne 76; figures 1-4 *<br>--- | 1,3 | |
| A | DE-U-8 912 219 (ALBERT HANDTMANN MASCHINENFABRIK )<br>* page 10, ligne 21 - ligne 25; figures 1-3 *<br>--- | 1 | |
| A | WO-A-8 001 361 (PROTECTAIRE)<br>* abrégé; figure 1 *<br>----- | 1 | |

**DOMAINES TECHNIQUES RECHERCHES (Int. Cl.5)**

B65G
B61B
B62D
B05B

Le présent rapport a été établi pour toutes les revendications

| Lieu de la recherche | Date d'achèvement de la recherche | Examinateur |
|---|---|---|
| LA HAYE | 04 OCTOBRE 1991 | NEVILLE D.J. |